# EUROPEAN PATENT APPLICATION

(11) **EP 4 481 925 A1**
(43) Date of publication of application: **25.12.2024**
(21) Application number: 23901115.8
(22) Date of filing: 07.12.2023
(51) Int. Cl.: H01M 50/383, H01M 50/358, H01M 10/658, H01M 50/211, H01M 50/507, H01M 50/271

(54) **BATTERY MODULE AND BATTERY PACK INCLUDING SAME**

(30) Priority: 07.12.2022 KR 20220169450; 28.11.2023 KR 20230168582
(71) Applicant: LG Energy Solution, Ltd., Seoul 07335 (KR)
(72) Inventor: YIM, Sangwook, Daejeon 34122 (KR); RHIM, Soeun, Daejeon 34122 (KR); MIN, Jinki, Daejeon 34122 (KR)
(74) Representative: Plasseraud IP
(86) International application number: PCT/KR2023/020060
(87) International publication number: WO 2024/123097

(57) **Abstract**

The present disclosure relates to a battery module and a battery pack including the same. The battery module according to an embodiment of the present disclosure includes a plurality of battery cells; a housing that houses a plurality of battery cells; a barrier that is arranged between the plurality of battery cells and partitions a compartment together with the housing; and a vent part for a battery cell that is provided in the housing and arranged in the compartment, wherein the housing and the barrier are connected to each other to define the compartment.

## Description

### [TECHNICAL FIELD]

### Cross Citation with Related Application(s)

This application claims the benefit of Korean Patent Application No. 10-2022-0169450 filed on December 7, 2022 and Korean Patent Application No. 10-2023-0168582 filed on November 28, 2023 in the Korean Intellectual Property Office, the disclosures of which are incorporated herein by reference in their entirety.

The present disclosure relates to a battery module and a battery pack including the same, and more specifically, to a battery module having improved heat propagation cutoff function in the event of thermal runaway, and a battery pack including the same.

### [BACKGROUND]

As the technology development of and the demand for mobile devices have increased, the demand for secondary batteries as energy sources has rapidly increased. A variety of researches on batteries capable of meeting various needs have been carried out accordingly.

A secondary battery has attracted considerable attention as an energy source for power-driven devices, such as an electric bicycle, an electric vehicle, and a hybrid electric vehicle, as well as an energy source for mobile devices, such as a mobile phone, a digital camera, and a laptop computer.

Recently, along with a continuous rise of the necessity for a large-capacity secondary battery structure, including the utilization of the secondary battery as an energy storage source, there is a growing demand for a battery pack of a multi-module structure which is an assembly of battery modules in which a plurality of secondary batteries are connected in series/parallel.

Meanwhile, when a plurality of battery cells are connected in series or in parallel to configure a battery pack, it is common to configure a battery module composed of at least one battery cell first and then configure a battery pack by using at least one battery module and adding other components. Since battery cells constituting such a medium- or large-sized battery module are composed of secondary batteries which can be charged and discharged, such a high-output large-capacity secondary battery generates a large amount of heat in a charge and discharge process.

If the internal temperature of a battery cell rises under certain conditions, thermal runaway may occur from excessively overheated or overcharged battery cells due to abnormal reactions of the battery cells.

In the event of thermal runaway, high-temperature heat and exhaust gas containing exhaust byproducts are discharged from the battery cell in question. In the regard, it is important to prevent such high-temperature heat and exhaust gas in the battery module from moving to other battery cells and causing damage, namely, prevent heat transfer.

Thereby, efforts have been made to construct a battery module by partitioning the battery module and arranging battery cells in the portioned region, however, there is a problem that this partition is expensive and requires a lot of space.

### [DETAILED DESCRIPTION OF THE INVENTION]

### [Technical Problem]

It is an object of the present disclosure to prevent (or minimize) heat transfer due to thermal runaway.

However, the technical problems to be solved by embodiments of the present disclosure are not limited to the above-mentioned problems, and can be variously expanded within the scope of the technical idea included in the present disclosure.

### [Technical Solution]

According to one aspect of the present disclosure, there is provided a battery module comprising: a plurality of battery cells; a housing that houses a plurality of battery cells; a barrier that is arranged between the plurality of battery cells and partitions a compartment together with the housing; and a vent part for a battery cell that is provided in the housing and arranged in the compartment, wherein the housing and the barrier are connected to each other to define the compartment.

The plurality of battery cells include a plurality of battery cell groups, and the barrier mayh be arranged between the plurality of battery cell groups. For example, each of the plurality of battery cell groups may be arranged within each corresponding compartment.

The barrier and the vent part may not be overlapping. For example, the vent parts may be arranged in rows, and the barrier may be arranged between the rows of vent parts.

The barrier may include a heat-resistant material and/or a fire-resistant material. In one embodiment, the barrier may include one of a fiberglass sheet, a silicone sheet, mica, (MICA), or FLAME BARRIER FRB, and a foam pad.

In addition, the barrier may further include a reinforcing material. In one embodiment, the barrier may further include the reinforcing material and the heat-resistant material stacked on the reinforcing material.

The housing may include a module frame having a pair of first surfaces and a pair of second surfaces arranged perpendicularly to the pair of first surfaces, and the barrier may be supported in contact with the pair of first surfaces or the pair of second surfaces.

The barrier may be arranged along the longitudinal direction of the module frame.

The pair of first surfaces may consist of a wide surface of the module frame, and the pair of second surfaces may consist of a narrow surface of the module frame, and the vent part may include a through hole that passes through at least one of the pair of first surfaces.

The through holes may be arranged in plural numbers along the longitudinal direction of at least one of the surfaces.

The through holes may be arranged in a plurality of rows, and the barrier is arranged between rows of adjacent through holes.

In another embodiment, the battery module further comprises a bus bar assembly including a bus bar electrically connected to the battery cell and a bus bar frame on which the bus bar is supported, wherein the barrier may be supported in contact with the bus bar frame.

In another embodiment, the battery module further comprises a bus bar assembly including a bus bar electrically connected to the battery cell and a bus bar frame on which the bus bar is supported, and an end plate that is coupled to the module frame while covering the bus bar assembly, wherein the barrier may be supported in contact with the end plate.

The plurality of battery cells include a plurality of battery cell groups, the bus bar frame includes a plurality of sub-bus bar frames separated from each other corresponding to the plurality of battery cell groups, and the barrier may extend between adjacent sub-bus bar frames among the plurality of sub-bus bar frames and abut on the inner surface of the end plate.

The end plate may include an additional vent part for battery cells placed in the compartment.

The additional vent part may include an additional through hole that passes through the end plate.

The battery module further comprises a bus bar assembly including a bus bar electrically connected to the battery cell and a bus bar frame on which the bus bar is supported, wherein the bus bar frame is formed with a slit, and wherein the barrier may pass through the slit.

The battery module further comprises an end plate that is coupled to the module frame while covering the bus bar assembly, wherein the barrier passes through the slit and may be supported in contact with the end plate.

According to another aspect of the present disclosure, there is provided a battery pack comprising the above-mentioned battery module.

According to yet another aspect of the present disclosure, there is provided a device comprising the above-mentioned battery pack.

### [Advantageous Effects]

According to embodiments, exhaust gas discharged from a battery cell arranged in a compartment and flame caused thereby can be prevented from propagating to battery cells within an adjacent compartment, thereby minimizing loss of battery modules and battery packs.

Effects obtainable from the present disclosure are not limited to the effects mentioned above, and additional other effects not mentioned herein will be clearly understood from the description of the appended claims by those skilled in the art.

### [BRIEF DESCRIPTION OF THE DRAWINGS]

Features of embodiments of the present disclosure will become apparent to those skilled in the art with reference to the accompanying drawings and the following detailed description.
FIG. 1 is a perspective view illustrating a battery module according to a first embodiment of the present disclosure.
FIG. 2 is a cut-away perspective view cut along line II-II in FIG. 1.
FIG. 3 is a cross-sectional view taken along line III-III in FIG. 1.
FIG. 4 is a perspective view schematically illustrating a barrier according to an embodiment of the present disclosure.
FIG. 5 is a schematic cut-way perspective view of a battery module according to a second embodiment of the present disclosure.
FIG. 6 is a perspective view illustrating a battery module according to a third embodiment of the present disclosure.
FIG. 7 is a cut-way perspective view taken along line VII-VII of FIG. 6.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of portions that are not related to the description will be omitted for clarity, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

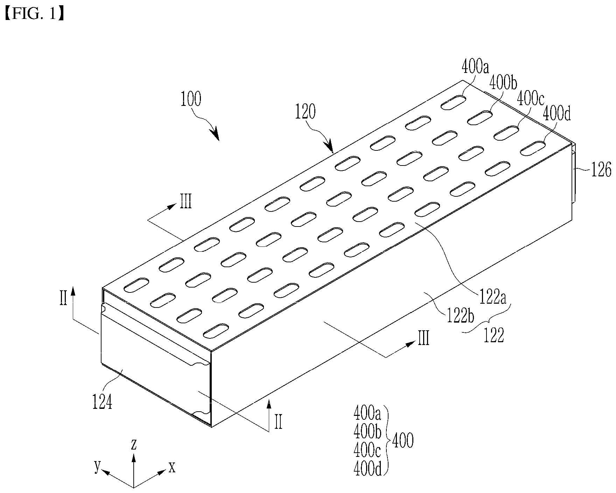

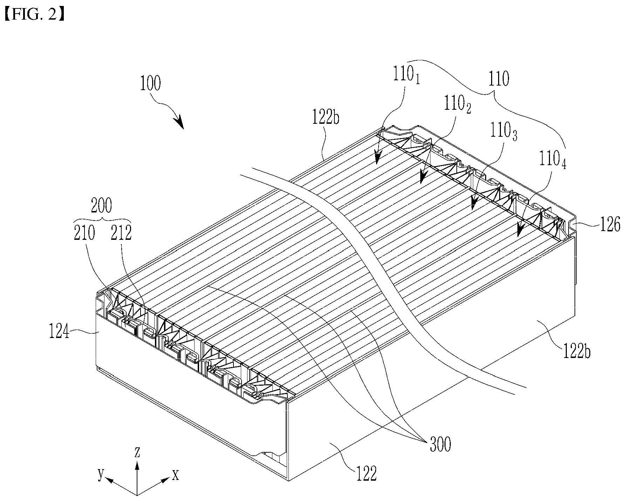

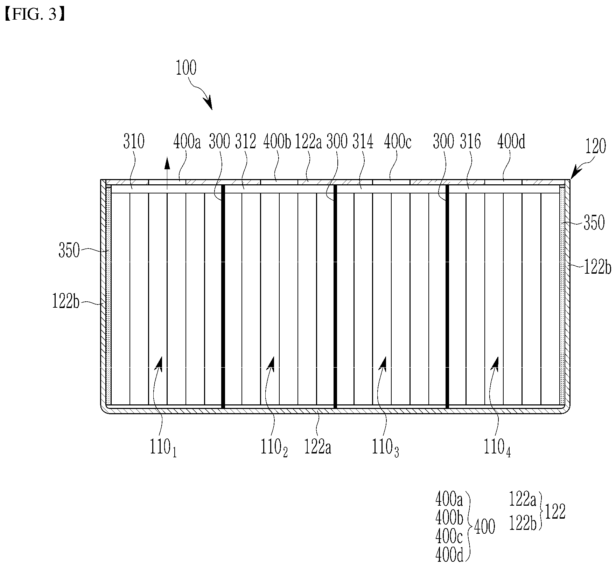

FIG. 1 is a perspective view illustrating a battery module according to a first embodiment of the present disclosure, FIG. 2 is a cut-away perspective view cut along line II-II in FIG. 1, and FIG. 3 is a cross-sectional view taken along line III-III in FIG. 1.

Referring to FIGS. 1 to 3, the battery module 100 according to an embodiment of the present disclosure includes a plurality of battery cells 110 and a housing 120 that houses the plurality of battery cells 110.

In the present embodiment, the battery cell 110 is constituted as a pouch-type secondary battery. That is, the battery cell 110 includes an electrode assembly including a positive electrode plate, a negative electrode plate and a separator, and a rectangular cell case that houses the electrode assembly. Electrode leads electrically connected to the positive electrode plate and the negative electrode plate are protruding on the outside of the cell case.

Such battery cells 110 are partitioned into a plurality of battery cell groups 110₁, 110₂, 110₃ and 110₄, and arranged in the internal space of the housing 120. In the present embodiment, the battery cells 110 are comprised of four battery cell groups 110₁, 110₂, 110₃ and 110₄, and one battery cell group is comprised of four battery cells, but the present disclosure is not necessarily limited thereto.

The housing 120, which houses the plurality of battery cell groups 110₁, 110₂, 110₃ and 110₄ may include a module frame 122, a first end plate 124, and a second end plate 126.

The module frame 122 may be configured as a square tubular frame consisting of a pair of first surfaces 122a and a pair of second surfaces 122b. In the present embodiment, the pair of first surfaces 122a consist of surfaces that are wider than the pair of second surfaces 122b, and the pair of second surfaces 122b consist of surfaces that are narrower than the pair of first surfaces 122a. Unlike the same, the first pair of surfaces 122a may consist of narrow surfaces, and the pair of second surfaces 122b may consist of wide surfaces.

Thereby, the module frame 122 has a housing space in which the battery cell groups 110₁, 110₂, 110₃ and 110₄ can be housed, and may have a structure in which openings are arranged opposite to each other along the longitudinal direction (x). Such a module frame 122 may be formed by extrusion molding, or may be configured such that plate materials constituting the wide surface 122a and the narrow surface 122b are connected to each other by welding, screws, rivets, etc. On the other hand, the module frame 122 may be configured such that one of the pair of narrow surfaces 122b and the pair of wide surfaces 122a (the wide surface arranged at the lower part of the battery module based on the drawing) is formed as an integrated structure, and the other of the pair of wide surfaces 122a (the wide surface arranged at the upper part of the battery module based on the drawing) is coupled to the integrated structure by a cover method. In the present embodiment, the module frame 122 is configured as such a case.

A first end plate (or front end plate) 124 and a second end plate (or rear end plate) 126 are fixed to both ends of the module frame 122 via welding or the like while closing the opening of the module frame 122, thereby covering both ends of the battery cell groups 110₁, 110₂, 110₃ and 110₄, for example, the front and rear parts.

The first end plate 124 and the second end plate 126 are located on the open first side (y-axis direction) and second side (-y side direction) of the module frame 122 to cover a stack of battery cell groups 110₁, 110₂, 110₃ and 110₄. The first end plate 124 and the second end plate 126 can physically protect the stack of the battery cell groups 110₁, 110₂, 110₃ and 110₄ and other electrical components from external impact.

A bus bar assembly 200 for electrically connecting the battery cells 110 to each other is arranged between the first end plate 124 and both ends of the stack of battery cell groups 110₁, 110₂, 110₃ and 110₄ and between the second end plate 126 and both ends of the stack of battery cell groups 110₁, 110₂, 110₃ and 110₄.

The bus bar assembly 200 includes a bus bar 210 and a bus bar frame 212. The bus bar 210 may be mounted on the bus bar frame 212 and electrically connected to the electrode lead of each battery cell 110. The bus bar frame 212 may fix the position of the bus bar 210 and physically protect the stack of battery cell groups 110₁, 110₂, 110₃ and 110₄ and the bus bar 210 from external impact. In the present embodiment, such a bus bar frame 212 is provided as one integrated structure.

On the other hand, a barrier 300 is arranged between adjacent battery cell groups 110₁, 110₂, 110₃ and 110₄. The barrier 300 prevents at least one battery cell in the battery cell groups 110₁, 110₂, 110₃ and 110₄ from causing thermal runaway, and high-temperature exhaust gases, exhaust byproducts (e.g., metal particles, etc.), flames, etc. discharged from the battery cell from moving to other battery cells.

More specifically, the barrier 300 is arranged between adjacent battery cell groups 110₁, 110₂, 110₃ and 110₄ (e.g., arranged between all four battery cell groups in this embodiment), so that it prevents the battery cells included in one battery cell group from causing thermal runway, and high-temperature exhaust gas and heat energy resulting therefrom from propagating to other battery cell groups.

For this purpose, the barrier 300 constitutes compartments 310, 312, 314 and 316 for the battery cell groups 110₁, 110₂, 110₃, and 110₄ together with the housing 120.

As described above, the barrier 300 is arranged between the battery cell groups 110₁, 110₂, 110₃, and 110₄. Here, the barrier 300 is supported in contact with the inner surfaces of both wide surfaces 122a of the module frame 122, as shown in FIG. 3. For example, the barrier 300 is arranged inside the module frame 122 so that its upper and lower edges about on the inner surfaces of both wide surfaces 122a of the module frame 122 based on the drawing.

Thereby, the interior of the housing 120 is provided with a plurality (four in this embodiment) of compartments 310, 312, 314 and 316 in which the barrier 300 and part of the housing 120 are connected and defined (or created).

Corresponding battery cell groups 110₁, 110₂, 110₃, and 110₄ are arranged in each of such compartments 310, 312, 314 and 316. At this time, the outermost battery cell of respective battery cell groups 110₁, 110₂, 110₃ and 110₄ may be in close contact with the barrier 300. Moreover, in the outermost battery cell groups 110₁ and 110₄ among the battery cell groups 110₁, 110₂, 110₃ and 110₄, a pad 350 for impact absorption or the like may be arranged between the battery cell adjacent to the narrow surface 122b of the module frame 122 and the narrow surface 122b. This pad 350 may be omitted if necessary.

The barrier 300 can maintain a fixed state by an adhesive force due to the arrangement of the battery cell groups 110₁, 110₂, 110₃ and 110₄ in the housing 120, and if necessary, the contact portion with the wide surface 122a can be fixed through an adhesive, welding, or the like to further strengthen the fixed state.

The barrier 300 may be configured to include a heat-resistant material and/or a fire-resistant material. For example, the barrier 300 may be configured from a glass fiber sheet, a silicon sheet, MICA, FLAME BARRIER FRB, or the like. On the other hand, the barrier 300 may be also configured from a foam pad. In addition, the barrier 300 may also be configured to further include a reinforcing material.

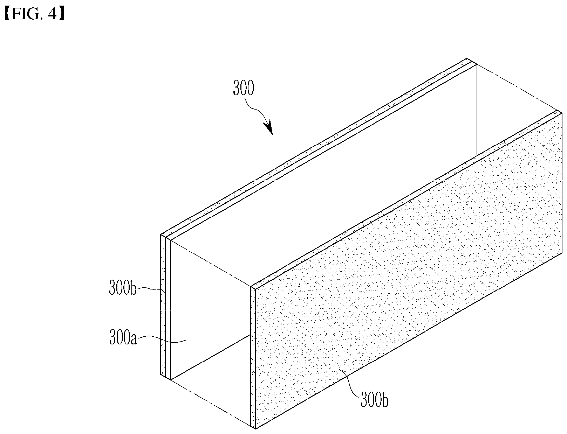

FIG. 4 is a perspective view schematically illustrating a barrier 300 according to an embodiment of the present disclosure. The illustrated barrier 300 may include a reinforcing material 300a and a heat-resistant material 300b. The reinforcing material 300a may be, for example, a metal sheet. The reinforcing material 300a and the heat-resistant material 300b are provided in a rectangular shape to match the shape of the battery cell 110, and the heat-resistant material 300b is stacked on both side surfaces of the reinforcing material 300a. When the barrier 300 of this structure is arranged between the battery cell groups 110₁, 110₂, 110₃ and 110₄, it may be arranged long along the longitudinal direction (x) of the module frame 122.

Meanwhile, a vent part 400 is provided on at least one of the wide surfaces 122a of the module frame 122. The vent part 400 is for the safety of the battery cells arranged in respective compartments 310, 312, 314 and 316, and is configured to discharge not only high-temperature exhaust gases or heat discharged from the battery cell, but also flames generated by them to the outside of the housing 120.

In the present embodiment, the vent part 400 includes through holes 400a arranged at equal intervals along the longitudinal direction (x) of the module frame 122 in the wide surface 122a of the module frame 122 (wide surface arranged at the upper part based on drawing standards). The through hole 400a may have an appropriate shape, and may have an appropriate size so that the module frame 122 has appropriate strength.

The vent part 400 does not overlap with the barrier 300. For example, as further seen in FIGS. 1 and 3, the vent part 400 is arranged in a row on the wide surface 122a of the module frame 122 corresponding to each compartment 310, 312, 314 and 316, and the barrier 300 is arranged between adjacent vent parts 400.

In the present embodiment, the vent part 400 is in the form of a slot formed long in the longitudinal direction (x) of the module frame 122, and is provided with a through hole 400a arranged in a row at the central part of the wide surface 122a of the module frame 122 corresponding to respective compartments 310, 312, 314 and 316. However, the vent part 400 of the present disclosure is not necessarily limited thereto. For example, the vent part may also be configured as a valve type.

The battery module 100 configured in this manner is applied to devices such as electric vehicles. If a battery cell of one battery cell group 110₁ (e.g., the first battery cell group from the left side in FIG. 3) generates an abnormal state during operation, high-temperature gas is discharged from the battery cell, and high-temperature heat is generated within the compartment 310. This high-temperature exhaust gas and heat are cut off by the barrier 300 and do not move toward adjacent battery cell groups, for example, the compartment 312 where the second battery cell group 1102 from the left side in FIG. 3 is arranged. On the other hand, the exhaust gas and heat may rise above the housing 120 where the vent part 400 is arranged, and be discharged to the outside of the housing 120 through the through hole 400a. Even if a flame occurs in the compartment 310, the flame can escape to the outside of the housing 120 through the through hole 400a. In this manner, even if thermal runaway occurs in the battery cell, the battery module 100 according to the embodiment can prevent or delay heat propagation from a battery cell in which thermal runaway has occurred to an adjacent battery cell by the compartment and the vent part created by the barrier 300 and the housing 120.

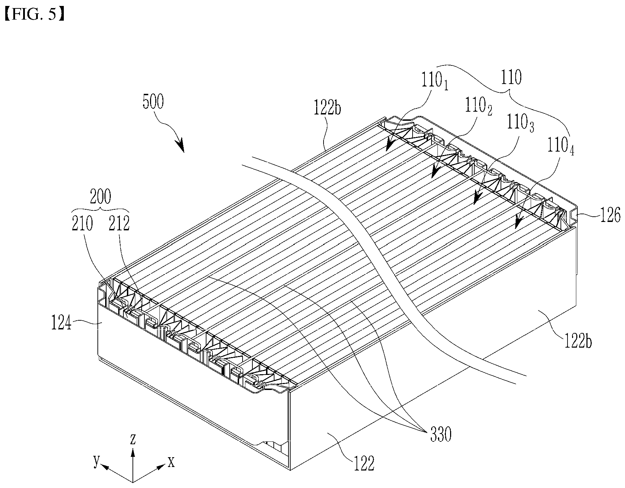

FIG. 5 is a diagram illustrating a battery module 500 according to a second embodiment of the present disclosure, and is a cut-way perspective view cut along line II-II of FIG. 1. Since the battery module 500 of the second embodiment is formed substantially in the same shape as the battery module 100 of the first embodiment, only the different configurations will be described below.

In the battery module 500 of the second embodiment, when the barrier 330 is arranged between the battery cell groups 110₁, 110₂, 110₃ and 110₄, both ends are supported in contact with the busbar frame 212 of the busbar assembly 200. That is, the upper and lower edges of the barrier 330 are in contact with the inner surface of the wide surface 122a of the module frame 122, and both end edges are in contact with the inner surface of the bus bar frame 212, based on the drawing.

Such a barrier 330 may also allow respective battery cell groups 110₁, 110₂, 110₃ and 110₄ to be completely isolated into the corresponding compartments 310, 312, 314 and 316 on the bus bar assembly 200 side when the compartments 310, 312, 314 and 316 are formed within the housing 120.

In the event of thermal runaway of a battery cell, by-products (metal particles, etc.) discharged together with the high-temperature exhaust gas may flow toward the bus bar assembly 200 to cause sparks. Meanwhile, the battery module 500 of the present embodiment can reduce the occurrence of sparks by discharging exhaust gas, and the like to the outside of the housing 120 through the vent part 400 in advance. Even if a spark occurs, since the barrier 330 is arranged around the bus bar assembly 200, the generated spark can be cut off by the barrier 330, and prevented from propagating throughout the battery module 500.

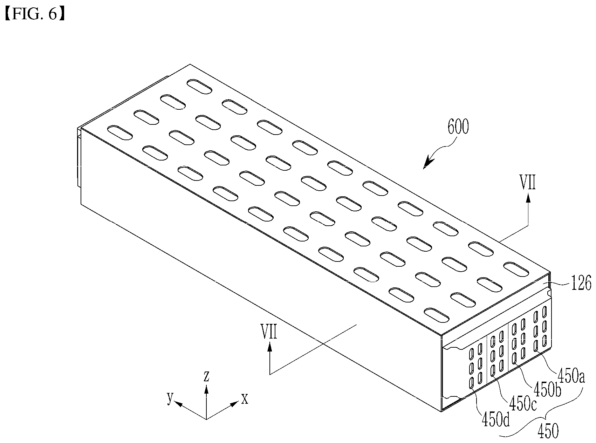

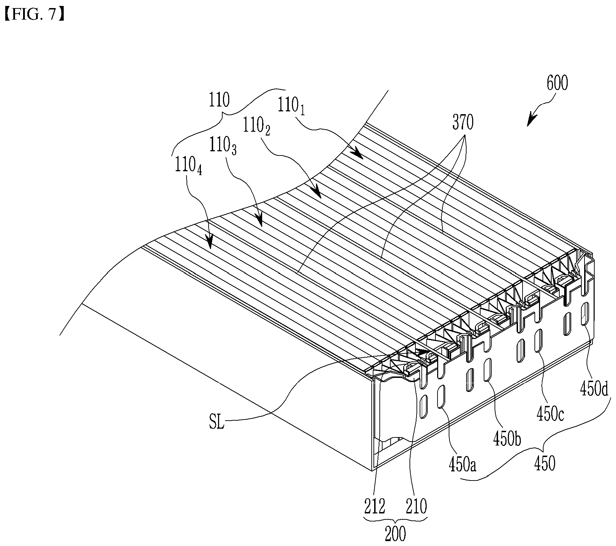

FIG. 6 is a perspective view illustrating a battery module according to a third embodiment of the present disclosure, and FIG. 7 is a cut-way perspective view taken along line VII-VII of FIG. 6.

Since the battery module 600 according to the third embodiment is formed substantially in the same shape as the battery module 100 according to the first embodiment, only the different configurations will be described below.

In the battery module 600 of the third embodiment, when the barrier 370 is arranged between the battery cell groups 110₁, 110₂, 110₃, and 110₄, at least one end edge of both ends is supported in contact with the inner surface of the end plate. Moreover, at least one of the two end plates is provided with an additional vent part.

FIG. 6 illustrates that the right end edge of the barrier 370 is supported in contact with the inner surface of the second end plate 126. In this case, unlike the above-mentioned embodiment, the bus bar frame 212 of the bus bar assembly 200 is not formed as an integral type, but is formed as a separate individual type corresponding to the battery cell groups 110₁, 110₂, 110₃ and 110₄. Thereby, when the barrier 370 is arranged within the module frame 122, the end region is arranged between the separated busbar frames 212, while the end edge can be brought into close contact with the inner surface of the second end plate 126. Specifically, the busbar frame 212 is formed with a slit (SL) into which the barrier 370 can be inserted. The barrier 370 may pass through the slit SL formed in the bus bar frame 212 and be in close contact with the inner surface of the second end plate 126.

The additional vent part 450 may include additional through holes 450a, 450b, 450c and 450d formed through the front surface of the second end plate 126. The additional through holes 450a, 450b, 450c and 450d have an arbitrary pattern corresponding to each of the battery cell groups 110₁, 110₂, 110₃ and 110₄ or each of the compartments 310, 312, 314 and 316, and can be provided on the front surface of second end plate 126.

In the battery module 600 of the third embodiment configured in this manner, each of the battery cell groups 110₁, 110₂, 110₃ and 110₄ is completely inserted into the corresponding compartments 310, 312, 314 and 316 up to the second end plate 126 side, when the compartments 310, 312, 314 and 316 are formed within the housing,

Therefore, the high-temperature exhaust gas or heat generated due to thermal runaway of the battery cells in any of the compartments 310, 312, 314 and 316 may be preferentially discharged to the outside of the housing 120 through the through holes 400a, 400b, 400c and 400d of the vent part 400. Additionally (or auxiliarily), at each side of the end plate, exhaust gas or heat can be quickly discharged to the outside of the housing 120 through the additional through holes 450a, 450b, 450c and 450d of the additional vent part 450.

As described above, the battery module according to embodiments of the present disclosure can prevent or delay heat propagation from the battery cell in question to an adjacent cell depending on the compartment structure provided inside the housing.

Such battery modules may be provided in plural numbers and configured as a battery pack, and the battery pack can improve the degree of freedom in a pack design by strengthening the heat propagation prevention structure due to thermal runaway provided in the battery module itself.

The above-mentioned battery module and battery pack including the same can be applied to various devices. Such devices can be applied to vehicle means such as an electric bike, an electric vehicle, and a hybrid electric vehicle or ESS(Energy Storage System), but the present disclosure is not limited thereto, and also can be applied to various devices capable of using the battery module and the battery pack including the same, which falls within the scope of the present disclosure.

Although the invention has been described in detail with reference to preferred embodiments thereof, the scope of the present disclosure is not limited thereto, and various modifications and improvements can be made by those skilled in the art using the basic concepts of the present disclosure, which are defined in the appended claims, which also falls within the scope of the present disclosure.

### [Description of Reference Numerals]

100, 500, 600: battery module
110: battery cell
1101, 1102, 1103, 1104: battery cell groups
120: housing
122: module frame
122a: wide surface
122b: narrow surface
124: first end plate
126: second end plate
200: bus bar assembly
210: bus bar
212: bus bar frame
300, 330, 370: barrier
310, 312, 314, 316: compartment
400: vent part
400a, 400b, 400c, 400d: through hole
450: additional vent part
450a, 450b, 450c, 450d: additional through holes

## Claims

1. A battery module comprising:
a plurality of battery cells;
a housing that houses a plurality of battery cells;
a barrier that is arranged between the plurality of battery cells and partitions a compartment together with the housing; and
a vent part for a battery cell that is provided in the housing and arranged in the compartment,
wherein the housing and the barrier are connected to each other to define the compartment.

2. The battery module of claim 1, wherein:
the plurality of battery cells include a plurality of battery cell groups, and the barrier is arranged between the plurality of battery cell groups.

3. The battery module of claim 1, wherein:
the barrier and the vent part are not overlapping.

4. The battery module of claim 1, wherein:
the barrier includes a heat-resistant material and/or a fire-resistant material.

5. The battery module of claim 4, wherein:
the barrier includes one of a fiberglass sheet, a silicone sheet, mica, (MICA), or FLAME BARRIER FRB, and a foam pad.

6. The battery module of claim 4, wherein:
the barrier further includes a reinforcing material.

7. The battery module of claim 6, wherein:
the barrier further includes the reinforcing material and the heat-resistant material stacked on the reinforcing material.

8. The battery module of claim 1, wherein:
the housing includes a module frame having a pair of first surfaces and a pair of second surfaces arranged perpendicularly to the pair of first surfaces, and
the barrier is supported in contact with the pair of first surfaces or the pair of second surfaces.

9. The battery module of claim 8, wherein:
the barrier is arranged along the longitudinal direction of the module frame.

10. The battery module of claim 8, wherein:
the pair of first surfaces consists of a wide surface of the module frame, and the pair of second surfaces consists of a narrow surface of the module frame, and
the vent part includes a through hole that passes through at least one of the pair of first surfaces.

11. The battery module of claim 10, wherein:
the through holes are arranged in plural numbers along the longitudinal direction of at least one of the first surfaces.

12. The battery module of claim 11, wherein:
the through holes are arranged in a plurality of rows, and the barrier is arranged between rows of adjacent through holes.

13. The battery module of claim 8,
further comprising a bus bar assembly including a bus bar electrically connected to the battery cell and a bus bar frame on which the bus bar is supported,
wherein the barrier is supported in contact with the bus bar frame.

14. The battery module of claim 8,
further comprising a bus bar assembly including a bus bar electrically connected to the battery cell and a bus bar frame on which the bus bar is supported, and an end plate that is coupled to the module frame while covering the bus bar assembly,
wherein the barrier is supported in contact with the end plate.

15. The battery module of claim 14, wherein:
the plurality of battery cells include a plurality of battery cell groups,
the bus bar frame includes a plurality of sub-bus bar frames separated from each other corresponding to the plurality of battery cell groups, and
the barrier extends between adjacent sub-bus bar frames among the plurality of sub-bus bar frames and abuts on the inner surface of the end plate.

16. The battery module of claim 14, wherein:
the end plate includes an additional vent part for battery cells placed in the compartment.

17. The battery module of claim 16, wherein:
the additional vent part includes an additional through hole that passes through the end plate.

18. The battery module of claim 8,
further comprising a bus bar assembly including a bus bar electrically connected to the battery cell and a bus bar frame on which the bus bar is supported,
wherein the bus bar frame is formed with a slit, and
wherein the barrier passes through the slit.

19. The battery module of claim 18,
further comprising an end plate that is coupled to the module frame while covering the bus bar assembly,
wherein the barrier passes through the slit and is supported in contact with the end plate.

20. A battery pack comprising the battery module of any one of claims 1 to 19.

21. A device comprising the battery pack of claim 20.
